# EUROPÄISCHE PATENTSCHRIFT

(11) **EP 2 203 332 B1**
(45) Veröffentlichungstag und Bekanntmachung des Hinweises auf die Patenterteilung: **24.07.2013**
(21) Anmeldenummer: 08804518.2
(22) Anmeldetag: 22.09.2008
(51) Int. Cl.: C09D 7/12, B05D 5/08, C08J 7/04

(54) **STRANGFÖRMIGES PROFIL SOWIE VERFAHREN ZUM BESCHICHTEN EINES STRANGFÖRMIGEN PROFILS**
STRAND-SHAPED PROFILE AND METHOD FOR COATING A STRAND-SHAPED PROFILE
PROFILÉ EN FORME DE BARRE ET PROCÉDÉ DE REVÊTEMENT D'UN PROFILÉ EN FORME DE BARRE

(30) Priorität: 19.10.2007 DE 102007050120
(43) Veröffentlichungstag der Anmeldung: 07.07.2010
(73) Patentinhaber: Robert Bosch GmbH, 70442 Stuttgart (DE)
(72) Erfinder: DUVAL, Vincent, B-1030 Bruxelles-Schaerbeek (BE); VERBURGH, Yves, B-2370 Puurs (BE); CARLIER, Valerie, B-5340 Gesves (BE)
(86) Internationale Anmeldenummer: PCT/EP2008/062591
(87) Internationale Veröffentlichungsnummer: WO 2009/053186

(56) Entgegenhaltungen:
- WO-A-03/106575
- WO-A1-2009/019112
- US-A- 4 045 838
- US-A1- 2003 087 767
- US-A1- 2003 157 257
- US-A1- 2005 127 552

## Beschreibung

### Stand der Technik

Die Erfindung geht aus von einem strangförmigen Profil aus einem Elastomermaterial für ein Wischblatt gemäß dem Oberbegriff des Anspruchs 1. Weiterhin betrifft die Erfindung ein Verfahren zum Beschichten eines strangförmigen Profils.

Strangförmige Profile aus einem Elastomermaterial werden zum Beispiel für Wischblätter, insbesondere als Wischblätter für Scheibenwischer, eingesetzt. Hierbei ist es wichtig, dass sich das als Wischblatt eingesetzte strangförmige Profil der Kontur der Scheibe eines Kraftfahrzeugs möglichst gut anpassen kann und auch bei unterschiedlichen Temperaturen flexibel bleibt. Aus diesem Grund werden die Wischblätter in der Regel aus Elastomerprofilen gefertigt, wobei im Wesentlichen Gummimaterialien, wie Naturkautschuk oder Chloroprenkautschuk verwendet werden. Daneben sind jedoch auch Wischblätter aus Silikonkautschuk oder Polyurethankautschuk bekannt.

Gegenüber Materialien, wie Glas oder Kunststoff, weisen Elastomere jedoch hohe Gleitreibungskoeffizienten auf, so dass bei einer festgelegten vertikalen Auflagekraft eines Elastomerprofils in Form eines Scheibenwischblattes auf der Oberfläche einer Glasscheibe häufig ein Vielfaches der Auflagekraft für eine Horizontalbewegung aufgewendet werden muss. Dies stellt kein wesentliches Problem dar, wenn der Scheibenwischer bei Nässe betrieben wird, da durch den Wasserfilm auf der Scheibe ein Schmierfilm zwischen dem Scheibenwischblatt und der Scheibe gebildet wird, so dass sich eine hydrodynamische Schmierung einstellt. Probleme treten jedoch auf, wenn das Scheibenwischblatt ohne Wasser als Schmierfilm betrieben wird, beispielsweise im Sommer oder nach kurzen Regenschauern. Unter derartigen Bedingungen erfolgt ein schnelles Abtrocknen der Scheibe, wodurch der Reibungskoeffizient stark ansteigt. Dies kann zu Quietschen, Rattern oder sogar Stillstand des Scheibenwischers führen.

Um den Reibungskoeffizienten von Scheibenwischblättern gegenüber einer trockenen Glasscheibe herabzusetzen, wird häufig eine Chlorierung oder Bromierung der Oberfläche des Scheibenwischblattes, d. h. eine Härtung des Scheibenwischblattes, durchgeführt. Dies erfordert jedoch eine exakte Prozessführung und ist unter Umweltschutzaspekten nicht unproblematisch. Darüber hinaus kann durch derartige Behandlungsverfahren die Wischqualität negativ beeinflusst werden.

Alternativ ist es auch bekannt, das Scheibenwischblatt mit einer Beschichtung zu versehen, die den Gleitreibungskoeffizienten herabsetzt.

Aus DE-A 101 16 929 sind beispielsweise eine Gleitlackkomponente und ein Gleitlack zum Beschichten von Elastomeren für Scheibenwischerblätter bekannt. Die Gleitlackkomponente enthält dabei ein Polyurethan, ein Siloxan sowie ein Polyamidpulver, ein Polyethylenpulver oder eine Lösung eines Polyamids. Die vorgeschlagenen Gleitlacke wirken als harte physikalische Abstandshalter, die über die beschichtete Oberfläche hinausragen, mit dem Nachteil, dass hierdurch die Wischqualität negativ beeinflusst wird, insbesondere durch Eintrübung und Schlierenbildung während des Wischens. Zudem werden die im Gleitlack enthaltenen Füllstoffe leicht aus der Beschichtung getrennt, da diese nur schlecht haften und die Beschichtungsstruktur eine mangelhafte Kohäsion der Verbindung zeigt.

Ein Beschichtungsmittel für ein Gummiwischerblatt ist ebenfalls aus DE-A 101 32 026 bekannt. Hierbei wird das Gummiwischerblatt mit einem Beschichtungsfilm versehen, wobei der Beschichtungsfilm ein partikelförmiges Feststoffschmiermittel und ein Bindemittel aufweist. Das Bindemittel weist einen 0,5 %-Modul von 1 MPa oder mehr und eine Bruchlängung von 1 % oder mehr auf. Der Elastizitätsmodul bezieht sich jedoch nur auf die Beschichtung und nicht auf die Kohäsionsfestigkeit des Verbundes aus Polymerbindemittel und Graphit und somit nicht auf die Verschleißfestigkeit.

Aus der US-A-4 045 838 ist ein verbesserter Scheibenwischer für die Windschutzscheibe bekannt, bei dem die Kantenoberfläche einen geringen Reibungskoeffizienten aufweist und mit einer wirksamen Dicke eines Beschichtungsmaterials aus der Gruppe der Elastomer- und Plastikmaterialien beschichtet ist. Weiterhin sind aus der US 2003/157257 A1 eine Gleitlackkomponente und ein Gleitlack, die insbesondere zum Beschichten von Elastomerprofilen geeignet sind, bekannt, wobei die Gleitlackkomponente ein Polyurethan, ein Siloxan wie auch ein Polyamid-Pulver, ein Polyethylen-Pulver oder eine Polyamid-Lösung enthält.

### Offenbarung der Erfindung

### Vorteile der Erfindung

Ein erfindungsgemäß ausgebildetes strangförmiges Profil mit einem Grundsubstrat aus einem Elastomermaterial für ein Wischblatt, insbesondere ein Wischblatt für Scheibenwischer, ist zumindest teilweise mit einer reibungsmindernden Beschichtung versehen. Die Beschichtung umfasst erfindungsgemäß zwei Schichten, wobei eine Basisschicht, die direkt auf das Grundsubstrat aufgetragen ist, eine verschleißbeständige Beschichtung ist und eine Deckschicht, die auf die Basisschicht aufgetragen ist, reibungsmindernd ist.

In Kraftfahrzeugen werden vielfach Windschutzscheiben mit einer hydrophoben Oberfläche eingesetzt. Beim Betrieb des Scheibenwischers auf der hydrophoben Oberfläche verhält sich dieser, als ob er auf einer trockenen Oberfläche gleitet. Aufgrund der wasserabweisenden Eigenschaften der Windschutzscheibe kann sich kein schmierender Wasserfilm zwischen der Oberfläche der Windschutzscheibe und dem Wischblatt des Scheibenwischers ausbilden. Durch die erfindungsgemäße Beschichtung werden sowohl die Gleiteigenschaften verbessert als auch die Verschleißbeständigkeit erhöht. Die Scheibe kann schlierenfrei und trübungsfrei gewischt werden.

In der efindungsgemäβen Ausführungsform enthält die reibungsmindernde Deckschicht einen Trockenschmierstoff. Als Trockenschmierstoff eignen sich zum Beispiel Graphit, Polytetrafluorethylen, Polypropylen, Polyethylen, Molybdändisulfid oder eine Mischung aus mindestens zweien dieser Stoffe. Die Effizienz des Trockenschmierstoffes hängt im Wesentlichen von seiner relativen Konzentration in der Beschichtung ab. Je höher der Anteil des Trockenschmierstoffes ist, um so niedriger ist der Reibungskoeffizient. Jedoch führt gleichzeitig ein höherer Anteil an Trockenschmierstoff zu einer Abnahme der Kohäsionsfestigkeit und damit der Verschleißbeständigkeit der Beschichtung. Durch die erfindungsgemäße Lösung, bei der die Beschichtung zwei Schichten umfasst, wird neben der Senkung des Reibungskoeffizienten gleichzeitig auch eine Erhöhung der Verschleißbeständigkeit erzielt. Durch die Deckschicht, die reibungsmindernd ist, kann das strangförmige Profil auch für ein Wischblatt in einem Scheibenwischer eingesetzt werden, der auf einer hydrophoben Scheibe betrieben wird.

Der Trockenschmierstoff weist vorzugsweise eine Partikelgröße im Bereich von 0,1 bis 15 µm, insbesondere im Bereich von 0,1 bis 5 µm, auf.

Um den Verschleiß zu mindern, ist es insbesondere gewünscht, wenn die Beschichtung gut auf dem Elastomermaterial des strangförmigen Profils haftet. Ein niedriger Reibungskoeffizient wird dadurch erzielt, dass die obere Schicht, d. h. die Deckschicht, einen größeren Anteil an Trockenschmierstoff enthält. Gleichzeitig ist es notwendig, um die Verschleißbeständigkeit zu erhöhen, dass die erste, direkt auf das strangförmige Profil aufgetragene Schicht, d. h. die Basisschicht, eine wesentlich höhere Verschleißbeständigkeit aufweist als die Deckschicht.

Um einen hinreichend niedrigen Reibungskoeffizienten des Wischblattes auf einer Scheibe zu erzielen, liegt der Anteil des Trockenschmierstoffs in der Deckschicht vorzugsweise im Bereich von 60 bis 100Gew.-% der Schicht. Besonders bevorzugt liegt der Anteil des Trockenschmierstoffs im Bereich von 75 bis 95 Gew.-%. Dieser Anteil an Trockenschmierstoff führt dazu, dass der Scheibenwischer mit dem erfindungsgemäß ausgebildeten Wischblatt auch auf einer trockenen Scheibe nicht quietscht, rattert oder sogar hängen bleibt.

In der erfindungsgemäβen Ausführungsform der Erfindung enthält die verschleißbeständige Basisschicht ebenfalls einen Trockenschmierstoff. Der Anteil an Trockenschmierstoff in der Basisschicht ist hierbei niedriger als der Anteil an Trockenschmierstoff in der Deckschicht. Durch den niedrigeren Anteil an Trockenschmierstoff in der Basisschicht wird die Kohäsionsfestigkeit der Basisschicht erhöht. Die Erhöhung der Kohäsionsfestigkeit erfolgt zum Beispiel durch einen größeren Anteil an Bindemittel und Vernetzer im Material für die Basisschicht. Insbesondere enthält die Basisschicht, um die Verschleißbeständigkeit zu erhöhen, nach dem Aushärten ein vernetztes Polymer.

Zum Erzielen einer ausreichenden Verschleißbeständigkeit ist der Anteil an Trockenschmierstoff in der Basisschicht vorzugsweise mindestens 30 Gew.-% niedriger als der Anteil an Trockenschmierstoff in der Deckschicht, jeweils bezogen auf die ausgehärtete Schicht. Besonders bevorzugt ist der Anteil an Trockenschmierstoff in der Basisschicht um mindestens 50 Gew.-% niedriger als der Anteil an Trockenschmierstoff in der Deckschicht.

Um eine hinreichende Verschleißbeständigkeit zu erzielen, enthält die Beschichtung vorzugsweise mindestens ein vernetztes Polymer, wobei der Anteil des vernetzten Polymers in der Basisschicht höher ist als in der Deckschicht. Besonders bevorzugt ist es, wenn die Deckschicht ein nicht vernetztes Polymer oder sogar gar kein Bindemittel enthält.

Dadurch, dass die Deckschicht lediglich einen geringen Anteil an vernetzten Polymeren enthält oder sogar gar keine vernetzten Polymere oder sogar überhaupt kein Bindemittel enthält, wird der Trockenschmierstoff beim Betrieb über die Basisschicht gleichmäßig verteilt. Es wird eine im Wesentlichen flache Oberfläche erzielt, durch die eine gleichmäßige Auflage auf der Windschutzscheibe erreicht wird. Hieraus resultiert eine gute Wischqualität und eine hohe Lebensdauer mit geringem Rattern auf hydrophoben Windschutzscheiben durch eine dauerhaft gut geschmierte Grenzfläche zwischen Windschutzscheibe und Beschichtung des Wischblattes wird erzielt. So hat sich insbesondere bei einem Test auf nassen hydrophoben Scheiben gezeigt, dass durch die den Trockenschmierstoff enthaltende Deckschicht ein niedriger Reibungskoeffizient erzielt wird, der über die Zeit konstant bleibt.

Die Erfindung betrifft weiterhin ein Verfahren zum Beschichten eines strangförmigen Profils, wobei in einem ersten Schritt eine Basisschicht auf das Profil aufgetragen wird und in einem zweiten Schritt eine Deckschicht. Die Basisschicht enthält zwischen 0 und 45 Gew.-% Trockenschmierstoff und die Deckschicht zwischen 60 und 100 Gew.-% Trockenschmierstoff. Bevorzugt enthält die Basisschicht zwischen 30 und 45 Gew.-% Trockenschmierstoff und die Deckschicht zwischen 75 und 95 Gew.-%. Der Anteil an Trockenschmierstoff ist erfindungsgemäß in der Deckschicht größer als in der Basisschicht.

Das unbeschichtete strangförmige Profil aus dem Elastomermaterial wird zum Beispiel durch Extrusion, Spritzgießen oder Formpressen nach üblichen, dem Fachmann bekannten Prozessen hergestellt.

Um eine verschleißfeste Beschichtung zu erzielen, ist es bevorzugt, wenn das Beschichtungsmittel für die Basisschicht mindestens ein Bindemittel und mindestens einen Vernetzer enthält. Das Bindemittel ist vorzugsweise ein Bindemittel auf Polyurethanbasis. Zum Beispiel eignet sich als Bindemittel ein hydroxy-funktionales Polyester-Polyurethan-Harz. Als Härter wird zum Beispiel ein methylierter Melamin-Aminoplast mit hohem Imino-Gehalt eingesetzt. Weitere geeignete Bindemittel sind zum Beispiel Polyacrylatharze, Polyester-Polyurethanharze, Polyether-Polyurethanharze, Polyesterharze, Polyamidharze, Polyamidimidharze und weitere geeignete Härter sind beispielsweise Isocyanat-Vernetzer, Epoxid-Vernetzer, Silan-Vernetzer, Polyaziridin-Vernetzer, Carbodiimid-Vernetzer.

Das Beschichtungsmaterial für die Deckschicht enthält neben dem Trockenschmierstoff vorzugsweise ein nicht vernetzendes Bindemittel, zum Beispiel Bindemittel auf Basis von Acrylatestem, Methacrylatestern und Styrol. Weiterhin kann das Beschichtungsmaterial für die Deckschicht Additive, wie Verdickungsmittel und Dispergiermittel enthalten, um eine stabile Dispersion zu erzeugen. Als Dispergiermittel werden zum Beispiel handelsübliche Tenside eingesetzt.

In einer ersten Ausführungsform des erfindungsgemäßen Verfahrens wird die Basisschicht vor dem Auftragen der Deckschicht ausgehärtet. Hierzu wird die Basisschicht zum Beispiel zunächst getrocknet, um Lösungsmittel zu entfernen. Anschließend erfolgt das Aushärten der Schicht. Beim Aushärten vernetzen das Bindemittel und der Härter, so dass eine verschleißfeste, vernetzte Schicht entsteht. Das Trocknen zum Entfernen des Lösungsmittels erfolgt vorzugsweise bei einer Temperatur im Bereich von 50 bis 100 °C und einer Dauer von 1 bis 5 min. Das Aushärten erfolgt vorzugsweise bei einer Temperatur im Bereich von 75 bis 160 °C für eine Dauer von 5 bis 15 min. Alternativ ist es auch möglich, bei Raumtemperatur für eine Dauer von mindestens 6 Tagen auszuhärten. Hierdurch wird ein vernetzter und wasserbeständiger Film erhalten. Die Filmdicke liegt dabei vorzugsweise im Bereich von 0,2 bis 5 µm.

Nach dem Aushärten der Basisschicht wird die Deckschicht aufgetragen. Nach dem Auftragen der Deckschicht wird diese getrocknet, um das Lösungsmittel zu entfernen. Das Trocknen erfolgt vorzugsweise bei einer Temperatur im Bereich von 50 bis 150 °C. Bei Einsatz eines nicht vernetzenden Bindemittels wird eine nicht vernetzte Deckschicht erhalten.

In einer zweiten Ausführungsform wird die Deckschicht auf die noch nicht ausgehärtete Basisschicht aufgetragen. Nach dem Auftragen der Deckschicht werden beide Schichten gemeinsam getrocknet und ausgehärtet. Alternativ ist es auch möglich, die Basisschicht zunächst zu trocknen, dann die Deckschicht aufzubringen und anschließend beide Schichten gemeinsam auszuhärten.

In einer Ausführungsform wird die Beschichtung nach dem Vulkanisieren auf das strangförmige Profil aufgetragen. Dies ermöglicht es, zunächst das strangförmige Profil zu erzeugen und später die Beschichtung aufzubringen.

Bevorzugt ist es jedoch, wenn die Beschichtung auf das nicht vulkanisierte, strangförmige Profil aufgetragen wird. Das Profil wird dann anschließend zusammen mit der Beschichtung vulkanisiert. Hierdurch ist es möglich, dass die bei der Vulkanisation zugeführte Energie gleichzeitig zum Aushärten und/oder thermischen Vernetzen der Beschichtung genutzt werden kann. Zudem erfolgt die Aushärtung des Beschichtungsmaterials in sehr kurzer Zeit. Weiterhin wird aufgrund der höheren Reaktivität des nicht vulkanisierten Elastomermaterials für das strangförmige Profil eine bessere Vernetzung des Beschichtungsmaterials der Basisschicht mit dem den Untergrund bildenden Elastomer erzielt.

Um zu vermeiden, dass die Deckschicht vernetzt und hierdurch die Gleiteigenschaften reduziert werden, ist es bevorzugt, dass die Basisschicht der Beschichtung auf das nicht vulkanisierte Elastomermaterial aufgetragen wird, anschließend das Elastomermaterial vulkanisiert wird und daran anschließend die Deckschicht zur Reduzierung des Reibbeiwertes aufgetragen wird.

Weiterhin bevorzugt ist es, wenn das strangförmige Profil als Doppelprofil ausgebildet wird, die Basisschicht auf das Doppelprofil aufgetragen wird, daran anschließend das Doppelprofil in zwei Einzelprofile getrennt wird und danach die Deckschicht aufgetragen wird. Bei der Herstellung von Wischblättern in Form eines Doppelprofils sind die beiden Profile im Allgemeinen entlang der Wischkante des Wischblattes miteinander verbunden. Die Trennung in zwei Einzelprofile erfolgt dann durch ein Schneiden des Profiles entlang der Wischkante. Hierdurch wird die Schnittfläche nur mit der Deckschicht beschichtet. Dies führt zu einer verbesserten Wischqualität gegenüber einer Beschichtung mit Basisschicht und Deckschicht.

Nach dem Trennen in die Einzelprofile wird die zweite, reibungsmindernde Schicht aufgetragen. Da die reibungsmindernde Schicht nur wenig oder gar nicht vernetzt ist, bildet sich ein gleichmäßiger Film auf der Wischkante aus.

### Ausführungsbeispiele

### Vergleichsbeispiel

Eine wässrige Beschichtungszusammensetzung enthält eine Polyester-PolyurethanDispersion, einen methylierten Iminomelaminaminoplast-Vernetzer, Graphit als Trockenschmierstoff und ein Verdickungsmittel. Diese Beschichtungszusammensetzung wird auf ein Elastomersubstrat aufgebracht. Das Elastomersubstrat ist ein spritzgegossenes Doppelwischerprofil aus einer chlorierten Gummizusammensetzung. Nach einer Eingangstrocknung, um das wässrige Lösungsmittel zu verdampfen, wird die Beschichtungszusammensetzung bei 150 °C 10 min lang ausgehärtet. Es entsteht ein 4 µm dicker vernetzter und wasserbeständiger Film.

Die Zusammensetzung der ausgehärteten Basisschicht enthält 54,6 Gew.-% einer vernetzten Harzzusammensetzung eines hydroxy-funktionalen Polyester-Polyurethan-Harzes (Bayhydrol PT 241^{®} der Bayer Material Science) mit einem mittleren Hydroxyl-Anteil von 2,5 %, versetzt mit einem methylierten Melamin-Aminoplast-Härters mit hohem Imino-Gehalt (Cymel 303 LF^{®} der Cytec), 34,0 Gew.-% Grafit, 10,6 Gew.-% Polyethylen (HDPE) und 0,8 Gew.-% Acrylatverdicker.

Die so erzeugte Basisschicht wurde 30 min in einem Wischtest auf einer hydrophoben Windschutzscheibe, auf die Wasser gesprüht wurde, um Regenbedingungen zu simulieren, getestet. Die anfängliche Wischqualität war weniger gut und zeigte Streifen und Trübungen über einen langen Zeitraum. Nach 5 min begann die aufgezeichnete Ratter-Amplitude anzusteigen und erreichte ein Niveau oberhalb von 14 mm.

Der Reibwert der Basisschicht beim Test auf einer befeuchteten rotierenden, hydrophoben Glasscheibe erhöhte sich mit der Zeit und lag bei einer Geschwindigkeit von 30 cm/s nach 30 min bei 0,60.

### Beispiel 1

Auf ein Doppelprofil wird eine Basisschicht entsprechend dem Vergleichsbeispiel aufgebracht. Nach dem Aushärten der Basisschicht wird das Doppelprofil in zwei Einzelprofile geschnitten. Auf die Einzelprofile wurde eine Graphitdispersion aufgesprüht, um sowohl die Basisschicht als auch die Schneidfläche zu beschichten. Die Graphitdispersion wurde bei 90 °C getrocknet, um das wässrige Lösungsmittel zu entfernen. Es wurde eine nicht vernetzte Deckschicht erhalten. Die Deckschicht enthält 4,6 Gew.-% des festen Bindemittel-Polymers, 3,4 Gew.-% Verdickungsmittel, 10,2 Gew.-% Tenside und 81,8 Gew.-% Graphit, jeweils bezogen auf die trockene Deckschicht.

Beim Test auf einer befeuchteten rotierenden, hydrophoben Glasscheibe zeigte die zwei Schichten umfassende Beschichtung einen stabilen niedrigen Reibungskoeffizienten, d. h., der gemessene Reibungskoeffizient blieb während des Testes konstant.

Der Reibbeiwert der zwei Schichten umfassenden Beschichtung lag nach 30 min bei 0,4 (bei einer Geschwindigkeit von 30 cm/s).

Die mit der Beschichtung aus zwei Schichten beschichteten Wischblätter wurden auch bei einem Scheibenwischertest während 30 min auf einer hydrophoben Windschutzscheibe eines Kraftfahrzeuges getestet. Auf die Windschutzscheibe wurde Wasser gesprüht, um Regen zu simulieren. Die aufgezeichnete Ratter-Amplitude blieb sehr niedrig während des gesamten Tests (weniger als 5 mm), und die Wischblätter liefen glatt und ohne Geräusch über die Windschutzscheibe. Die Wischqualität blieb ausgezeichnet.

### Beispiel 2

Auf ein Wischerblatt aus einem chlorierten Gummimaterial wurde zunächst eine Basisschicht entsprechend der Basisschicht des Vergleichbeispiels aufgetragen. Auf die Basisschicht wurde trockenes Graphitpulver aufgetragen, das über die Oberfläche der Basisschicht der Einzelprofile gestrichen wurde. Die mit der zwei Schichten umfassenden Beschichtung versehenen Wischblätter wurden in einem Wischertest 30 min lang auf einer hydrophoben Windschutzscheibe getestet, auf die Wasser gesprüht wurde, um Regen zu simulieren. Die aufgezeichnete Ratter-Amplitude während des Tests liegt im Bereich zwischen 2 und 4 mm.

## Patentansprüche

1. Strangförmiges Profil mit einem Grundsubstrat aus einem Elastomermaterial für ein Wischblatt, insbesondere ein Wischblatt für Scheibenwischer, das zumindest teilweise mit einer reibungsmindernden Beschichtung versehen ist, **dadurch gekennzeichnet, dass** die Beschichtung zwei Schichten umfasst, wobei eine Basisschicht, die direkt auf das Grundsubstrat aufgetragen ist, eine verschleißbeständige Beschichtung ist und eine Deckschicht, die auf die Basisschicht aufgetragen ist, reibungsmindernd ist, wobei die reibungsmindernde Deckschicht einen Trockenschmierstoff enthält, wobei die erste verschleißbeständige Beschichtung ebenfalls einen Trockenschmierstoff enthält, und wobei der Anteil an Trockenschmierstoff in der Basisschicht niedriger ist als der Anteil an Trockenschmierstoff in der Deckschicht.

2. Strangförmiges Profil gemäß Anspruch 1, **dadurch gekennzeichnet, dass** der Trockenschmierstoff Graphit, Polytetrafluorethylen, Polypropylen, Polyethylen, Molybdändisulfid oder eine Kombination aus mindestens zwei dieser Stoffe ist.

3. Strangförmiges Profil gemäß Anspruch 1 oder 2, **dadurch gekennzeichnet, dass** der Anteil des Trockenschmierstoffs in der Deckschicht im Bereich von 60 bis 100 Gew.-% der ausgehärteten Schicht liegt.

4. Strangförmiges Profil gemäß Anspruch 1, **dadurch gekennzeichnet, dass** der Anteil an Trockenschmierstoff in der Basisschicht um mindestens 30 Gew.-% niedriger ist als der Anteil an Trockenschmierstoff in der Deckschicht, jeweils bezogen auf die ausgehärtete Schicht.

5. Strangförmiges Profil gemäß einem der Ansprüche 1 bis 4, **dadurch gekennzeichnet, dass** die Beschichtung ein vernetztes Polymer enthält, wobei der Anteil des vernetzten Polymers in der Basisschicht höher ist als in der Deckschicht.

6. Verfahren zum Beschichten eines strangförmigen Profils, wobei in einem ersten Schritt eine Basisschicht auf das Profil aufgetragen wird und in einem zweiten Schritt eine Deckschicht, wobei die Basisschicht zwischen 0 und 45 Gew.-% Trockenschmierstoff und die Deckschicht zwischen 60 und 100 Gew.-% Trockenschmierstoff enthält.

7. Verfahren gemäß Anspruch 6, **dadurch gekennzeichnet, dass** die Basisschicht vor dem Auftragen der Deckschicht ausgehärtet wird.

8. Verfahren gemäß Anspruch 6, **dadurch gekennzeichnet, dass** die Deckschicht auf die noch nicht ausgehärtete Basisschicht aufgetragen wird und beide Schichten gemeinsam ausgehärtet werden.

9. Verfahren gemäß einem der Ansprüche 6 bis 8, **dadurch gekennzeichnet, dass** die Beschichtung nach Formung des strangförmigen Profils aus einem Elastomermaterial auf das strangförmige Profil aufgetragen wird und das Profil mit der Beschichtung anschließend vulkanisiert wird.

10. Verfahren gemäß einem der Ansprüche 6 bis 8, **dadurch gekennzeichnet, dass** die Beschichtung nach dem Vulkanisieren auf das strangförmige Profil aufgetragen wird.

11. Verfahren gemäß einem der Ansprüche 6 bis 10, **dadurch gekennzeichnet, dass** das strangförmige Profil als Doppelprofil ausgebildet wird, die Basisschicht auf das Doppelprofil aufgetragen wird, anschließend das Doppelprofil in zwei Einzelprofile getrennt wird und danach die Deckschicht aufgetragen wird.

## Claims

1. Strand-shaped profile with a base substrate of an elastomer material for a wiper blade, in particular a wiper blade for windscreen wipers, which is at least partially provided with a friction-reducing coating, **characterized in that** the coating comprises two layers, wherein a base layer, which is applied directly to the base substrate, is a wear-resistant coating and a top layer, which is applied to the base layer, is friction-reducing, wherein the friction-reducing top layer contains a dry lubricant, wherein the first, wear-resistant coating likewise contains a dry lubricant, and wherein the proportion of dry lubricant in the base layer is lower than the proportion of dry lubricant in the top layer.

2. Strand-shaped profile according to Claim 1, **characterized in that** the dry lubricant is graphite, polytetrafluoroethylene, polypropylene, polyethylene, molybdenum disulphide or a combination of at least two of these substances.

3. Strand-shaped profile according to Claim 1 or 2, **characterized in that** the proportion of dry lubricant in the top layer lies in the range from 60 to 100% by weight of the cured layer.

4. Strand-shaped profile according to Claim 1, **characterized in that** the proportion of dry lubricant in the base layer is lower by at least 30% by weight than the proportion of dry lubricant in the top layer, in each case with respect to the cured layer.

5. Strand-shaped profile according to one of Claims 1 to 4, **characterized in that** the coating contains a crosslinked polymer, wherein the proportion of crosslinked polymer in the base layer is higher than in the top layer.

6. Method for coating a strand-shaped profile, wherein, in a first step, a base layer is applied to the profile and, in a second step, a top layer is applied, wherein the base layer contains between 0 and 45% by weight of dry lubricant and the top layer contains between 60 and 100% by weight of dry lubricant.

7. Method according to Claim 6, **characterized in that** the base layer is cured before the application of the top layer.

8. Method according to Claim 6, **characterized in that** the top layer is applied to the not yet cured base layer and the two layers are cured together.

9. Method according to one of Claims 6 to 8, **characterized in that** the coating is applied to the strand-shaped profile after the strand-shaped profile has been formed from an elastomer material, and the profile with the coating is subsequently vulcanized.

10. Method according to one of Claims 6 to 8, **characterized in that** the coating is applied to the strand-shaped profile after the vulcanizing.

11. Method according to one of Claims 6 to 10, **characterized in that** the strand-shaped profile is formed as a double profile, the base layer is applied to the double profile and after that the double profile is separated into two individual profiles and then the top layer is applied.

## Revendications

1. Profilé en forme de barre doté d'un substrat de base en matériau élastomère et prévu pour une lame de raclage, en particulier pour une lame de raclage d'essuie-glace, et doté au moins en partie d'un revêtement diminuant le frottement,
**caractérisé en ce que**
le revêtement comporte deux couches,
**en ce qu'**une couche de base appliquée directement sur le substrat de base forme un revêtement résistant à l'usure et une couche de recouvrement appliquée sur la couche de base diminue le frottement,
**en ce que** la couche de recouvrement diminuant le frottement contient un lubrifiant sec,
**en ce que** le premier revêtement résistant à l'usure contient également un lubrifiant sec et
**en ce que** la teneur en lubrifiant sec de la couche de base est plus basse que la teneur en lubrifiant sec de la couche de recouvrement.

2. Profilé en forme de barre selon la revendication 1, **caractérisé en ce que** le lubrifiant sec est le graphite, le polytétrafluoroéthylène, le polypropylène, le polyéthylène, le disulfure de molybdène ou une combinaison d'au moins deux de ces matériaux.

3. Profilé en forme de barre selon les revendications 1 ou 2, **caractérisé en ce que** la teneur en lubrifiant sec de la couche de recouvrement est de l'ordre de 60 à 100 % en poids de la couche durcie.

4. Profilé en forme de barre selon la revendication 1, **caractérisé en ce que** la teneur en lubrifiant sec de la couche de base est d'au moins 30 % en poids plus basse que la teneur en lubrifiant sec de la couche de recouvrement, chaque fois par rapport à la couche durcie.

5. Profilé en forme de barre selon l'une des revendications 1 à 4, **caractérisé en ce que** le revêtement contient un polymère réticulé, la teneur en polymère réticulé de la couche de base étant supérieure à celle de la couche de recouvrement.

6. Procédé de revêtement d'un profilé en forme de barre dans lequel une couche de base est appliquée sur le profilé dans une première étape et une couche de recouvrement dans une deuxième étape, la couche de base contenant entre 0 et 45 % en poids de lubrifiant sec et la couche de recouvrement entre 60 et 100 % en poids de lubrifiant sec.

7. Procédé selon la revendication 6, **caractérisé en ce que** la couche de base est durcie avant l'application de la couche de recouvrement.

8. Procédé selon la revendication 6, **caractérisé en ce que** la couche de recouvrement est appliquée sur la couche de base non encore durcie et **en ce que** les deux couches sont durcies conjointement.

9. Procédé selon l'une des revendications 6 à 8, **caractérisé en ce que** le revêtement est appliqué sur le profilé en forme de barre après le façonnage du profilé en forme de barre à partir d'un matériau élastomère et **en ce que** le profilé doté du revêtement est ensuite vulcanisé.

10. Procédé selon l'une des revendications 6 à 8, **caractérisé en ce que** le revêtement est appliqué sur le profilé en forme de barre après la vulcanisation.

11. Procédé selon l'une des revendications 6 à 10, **caractérisé en ce que** le profilé en forme de barre est configuré comme profilé double, **en ce que** la couche de base est appliquée sur le profilé double, **en ce que** le profilé double est ensuite découpé en deux profilés simples et **en ce que** la couche de recouvrement est ensuite appliquée.
